# EUROPEAN PATENT APPLICATION

(11) **EP 4 836 123 A1**
(43) Date of publication of application: **04.11.2026**
(21) Application number: 26171598.1
(22) Date of filing: 10.04.2026
(51) Int. Cl.: H01M 50/209, H01M 50/251

(54) **BATTERY RACK AND ENERGY STORAGE SYSTEM INCLUDING THE SAME**

(30) Priority: 30.04.2025 KR 20250057726
(71) Applicant: SAMSUNG SDI CO., LTD., Yongin-si, Gyeonggi-do 17084 (KR)
(72) Inventor: RYU, Jaelim, 17084 Yongin-si, Gyeonggi-do (KR); KIM, Sanggyu, 17084 Yongin-si, Gyeonggi-do (KR)
(74) Representative: Gulde & Partner

(57) **Abstract**

A battery rack and an energy storage system including the same. The battery rack includes base plates spaced apart from each other in a direction and each having a battery module arranged thereon, a frame extending in the direction and supporting the base plates, and a pair of side bodies on each of the base plates and facing each other with the battery module therebetween. At least one of the pair of side bodies includes a first body connected to one of the base plates and a second body on the first body and connected to the first body such that the second body is rotatable relative to the first body about a virtual body rotation axis.

## Description

### BACKGROUND

### 1. Field

The disclosure relates to a battery rack and an energy storage system including the same.

### 2. Description of the Related Art

As the issue of eco-friendly energy has recently come to the fore, energy storage systems (ESS) for storing produced energy are attracting attention. In case that an ESS is used, a system for power management may be easily established, and such a power management system may also be used for electric charging stations, etc., required for commercialization of electric vehicles.

Energy storage systems may have many forms, a representative form among which is a battery rack on which a battery module is stacked. A plurality of battery modules included in a battery rack may be supported by components of the battery rack such that a stacked state may be stably maintained.

The above-described information disclosed in the technology section that serves as the background of the disclosure is only for improving the understanding of the background of the disclosure, and thus may include information that does not constitute related art.

### SUMMARY

The disclosure aims to discharge a gas emitted from a battery module to the outside and to prevent (or at least mitigate) another battery module from being exposed to the gas emitted from a specific battery module by utilizing an opening/closing structure of side bodies that are on a base plate and face each other with the battery module therebetween.

However, technical problems to be solved by the disclosure are not limited to the problem, and other problems not mentioned may be clearly understood by those of ordinary skill in the art from the description of the disclosure described below.

According to an embodiment of the disclosure, a battery rack includes base plates spaced apart from each other in a direction and each base plate having a battery module arranged thereon, a frame extending in the direction and supporting the base plates, and a pair of side bodies arranged on a base plate and facing each other with the battery module therebetween. At least one of the pair of side bodies includes a first body connected to the base plate and a second body arranged on the first body and connected to the first body such that the second body is rotatable relative to the first body about a virtual body rotation axis.

The battery rack structure provides a crucial passive safety mechanism that effectively manages a catastrophic failure in a single battery module to prevent a chain reaction. The core technical effect stems from the two-part side body, where the second body is rotatable relative to the first body. When a battery abnormality causes a rapid increase in pressure and temperature within the sealed internal space, this pressure acts on the second body, forcing it to rotate into an open state. The primary advantage of this design is that it automatically creates an exhaust passage to safely discharge the high-temperature gas and debris to the outside, thereby preventing (or at least mitigating) thermal propagation to adjacent battery modules and enhancing the overall safety and stability of the energy storage system.

In one embodiment, the battery rack may further include a connection portion including a first connection member connected to the first body and a second connection member connected to the second body. The second connection member is rotatable relative to the first connection member around the virtual body rotation axis.

The main technical effect is that this connection portion provides a stable and reliable pivot, which precisely defines the location and behavior of the virtual body rotation axis. The primary advantage is enhanced manufacturability and operational predictability. This defined pivot ensures that the second body rotates in a controlled and repeatable manner when venting is required, resulting in a more robust and dependable passive safety feature.

In one embodiment, the virtual body rotation axis may be spaced apart from one of the pair of side bodies by a preset interval.

The technical effect of this offset is to create an inherent directional bias in the movement of the rotatable part, effectively turning it into a passive one-way valve. Because the pivot is located away from the main plane of the side body, the movable part can only swing outwards when pushed from inside the enclosure. Any force applied from the outside, such as vibration or an external impact, will simply press the movable part more firmly into its closed position. The primary advantage of this configuration is enhanced safety and reliability. It ensures that the vent opens only when there is a genuine internal overpressure event, preventing accidental openings..

In one embodiment, the virtual body rotation axis may be spaced apart from one of the pair of side bodies in a direction away from the battery module.

The technical effect of this outward placement is to create a robust mechanical lock when the vent is closed. Because the movable part is supported from behind by the fixed structure, any force applied from the outside, such as a pressure wave from an adjacent failing module or an external impact, will only push the movable part more firmly into its sealed position. The primary advantage is a superior level of containment and isolation between modules. This design ensures that a vent only opens in response to an internal pressure event within its own compartment and cannot be triggered by an external event.

In one embodiment, the virtual body rotation axis may be substantially parallel to one of the base plates.

This geometric constraint is to guarantee a uniform and consistent rotational movement of the movable part of the side body along its entire length. As the vent opens, it creates a clean, rectangular gap rather than a skewed or wedge-shaped opening. The primary advantage is enhanced structural stability and operational predictability. By ensuring the forces during a venting event are distributed evenly across the hinge mechanism, this parallel arrangement prevents binding or twisting, leading to more reliable activation.

In one embodiment, the battery rack may further include a side cover spaced apart from one of the pair of side bodies in the direction in which the virtual body rotation axis is spaced apart from the one of the pair of side bodies.

This enabeles the creation of a dedicated, enclosed exhaust passage between the side body and the side cover. When the movable part of the side body opens during a venting event, the gas is not released into the open environment but is instead captured and directed into this channel. The significant advantage of this is enhanced safety and control. The hot gas and debris are safely guided, typically upwards, away from adjacent battery modules, sensitive equipment, or personnel, thereby preventing collateral damage and a potential cascading failure.In one embodiment, the battery rack may further include an elastic member arranged between the second body and the side cover.

This feature provides a restoring force that constantly biases the movable part towards its closed position. When an internal overpressure event forces the vent open, it simultaneously compresses this elastic member, storing energy. An advantage of this is the creation of an automatic re-closing mechanism. Once the internal pressure subsides after the gas has been discharged, the stored energy in the elastic member pushes the movable part back into its sealed state.

In one embodiment, one of the pair of side bodies may connect a pair of base plates arranged adjacent to each other.

This ensures the integration of the side bodies into the main load-bearing structure of the battery rack. They are no longer just walls but become vertical support members that work in conjunction with the main frame. An advantage is a substantial increase in the overall structural rigidity and stability of the entire rack. By directly linking the stacked base plates, the side bodies create a more robust, cellular frame that is better able to resist twisting, bending, and vibration stresses. This enhanced structural integrity is crucial for maintaining the precise alignment and spacing of the heavy battery modules, especially during transport or in seismically active areas, leading to a more durable and reliable assembly.

In one embodiment, the battery rack may further include an end body arranged on one of the base plates, and the end body and the pair of side bodies together form an internal space in which the battery module is accommodated.

A technical effect of this feature is the creation of a contained volume that can effectively hold pressure. It ensures the proper functioning of the entire venting system. By sealing the front and back of the compartment, any pressure build-up from a battery failure is reliably contained and directed towards the movable side body, guaranteeing that the pressure-activated vent opens as designed.

In one embodiment, the battery rack may further include a guide body connected to an edge of one of the base plates and the guide body may be inclined downwardly toward the ground.

A technical effect is that this guide body functions as a gutter, collecting any fluid, such as coolant, that may leak from a battery module. Due to its inclination, it actively directs this liquid away from the interior of the rack and towards the ground. This prevents a cascading failure caused by liquid damage. By ensuring that fluid from a leaking upper module cannot drip onto the module directly below it, this feature mitigates the risk of short circuits, corrosion, and other liquid-induced failures.

In one embodiment, the guide body may be arranged with a preset inclination in the direction in which the base plates are spaced apart from each other.

This enabels a transformation of the guide body from a simple tilted surface into a precisely angled chute or spout. This design ensures that as the liquid drains downwards, it is also actively projected outwards, away from the vertical plane of the battery rack. This creates a more robust and complete isolation of the liquid fault. Instead of simply preventing liquid from dripping directly onto the module below, this feature ensures that the fluid is guided to a safe drip point, completely clear of the entire lower rack structure, including frames and connectors.

In one embodiment, one of the base plates may be inclined toward the guide body.

A technical effect of this feature is that this design actively channels any leaking liquid, regardless of where it originates on the base plate, towards the drainage system. Instead of relying on fluid to pool and eventually find its way to the edge, gravity now ensures it flows immediately and predictably to the collection point. This proactive drainage guarantees that all fluid is captured and discharged efficiently, minimizing the time the battery module is exposed to the leak and drastically reducing the possibility of liquid finding an alternative path to lower levels. This makes the overall safety system more robust and effective at containing liquid-related faults.

In one embodiment, the battery rack may further include a leakage detection sensor on one of the base plates and configured to detect liquid leaking from the battery module.

This is to convert the physical presence of a liquid leak into an electronic signal. This transforms a silent, passive failure event into a detectable, reportable condition. An advantage of this is that it enables early and immediate warning of a fault. Instead of waiting for a leak to cause visible damage or a functional failure, the system can instantly alert an operator or a battery management system the moment a leak begins. This allows for proactive intervention, such as scheduling maintenance, de-energizing the rack, or initiating safety protocols, which can prevent a minor issue like a coolant leak from escalating into a catastrophic failure involving short circuits and thermal events.

According to an embodiment of the disclosure, an energy storage system includes a battery rack configured to supply power, in which the battery rack includes base plates spaced apart from each other in a direction and in which each of the base plates has a battery module arranged thereon, a frame extending in the direction and supporting the base plates, and a pair of side bodies on one of the base plates and facing each other with the battery module therebetween. At least one of the pair of side bodies includes a first body connected to the base plate and a second body arranged on the first body and connected to the first body such that the second body is rotatable relative to the first body around a virtual body rotation axis.

In one embodiment, the energy storage system may further include a connection portion including a first connection member connected to the first body and a second connection member connected to the second body. The second connection member may be connected to the first connection member such that the second connection member is rotatable relative to the first connection member about the virtual body rotation axis.

In one embodiment, the virtual body rotation axis may be spaced apart from one of the pair of side bodies by a preset interval.

In one embodiment, the virtual body rotation axis may be spaced apart from one of the pair of side bodies in a direction away from the battery module.

In one embodiment, the virtual body rotation axis may be substantially parallel to the base plate.

In one embodiment, the energy storage system may further include a side cover spaced apart from one of the pair of side bodies in the direction in which the virtual body rotation axis is spaced apart from one of the pair of side bodies.

In one embodiment, the energy storage system may further include a guide body extending downwardly from an edge of one of the base plates.

### BRIEF DESCRIPTION OF THE DRAWINGS

The following drawings attached to this specification illustrate preferred embodiments of the disclosure, and serve to further understand the technical idea of the disclosure together with the detailed description of the disclosure described later, such that the disclosure should not be construed as being limited to the matters shown in such drawings:
FIG. 1 shows a battery pack according to an embodiment of the disclosure;
FIG. 2 is a cross-sectional view taken along a line I-I' of FIG. 1;
FIG. 3 is a cross-sectional view taken along a line II-II' of FIG. 1;
FIG. 4 is an enlarged view of a portion A of FIG. 3;
FIG. 5 is a view showing some components of FIG. 4 in operation;
FIG. 6 is a cross-sectional view taken along a line III-III' of FIG. 1; and
FIG. 7 is a cross-sectional view of a battery rack, taken along a line III-III' of FIG. 1, according to another embodiment of the disclosure.

### DETAILED DESCRIPTION

Hereinafter, embodiments of the disclosure will be described in detail with reference to the accompanying drawings. The terms and words used in the present specification and claims described above should not be construed as being limited to ordinary or dictionary meanings, and should be interpreted as meanings and concepts consistent with the technical idea of the disclosure based on the principle that the present inventors may appropriately define the concept of the terms to describe their invention in the best way. Therefore, the embodiments described in this specification and the configurations illustrated in the drawings are only some of the most preferred embodiments of the disclosure and do not represent all of the technical ideas of the disclosure, and it should be understood that there may be various equivalents and modified examples that may replace them at the time of filing this application.

As used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups.

To help understanding of the disclosure, the accompanying drawings are not shown according to the actual scale, but the dimensions of some components may be exaggerated. The same reference numeral may be given to the same component in different embodiments.

The statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. In case that a uniform parameter is uniform in a selected area, it may mean that it is uniform from an average point of view.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

In case that a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

In case that a component is described as being "connected", "coupled", or "connected" to another component, it should be understood that the components are directly connected or connectable to each other, but another component may be "interposed" between the components, or the components may be "connected", "coupled", or "connected" to each other through another component. In case that a portion is electrically coupled to another portion, this may include not only a case where they are directly connected to each other, but also a case where they are connected with another element therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

The terminology used herein is for the purpose of describing embodiments of the disclosure and is not intended to be limiting of the disclosure.

Hereinbelow, an x-axis, a y-axis, and a z-axis are not limited to three axes on an orthogonal coordinate system, and may be interpreted in a broad sense including them. For example, the x-axis, the y-axis, and the z-axis may be orthogonal to each other, but may also refer to different directions that are not orthogonal to each other.

For convenience of a description, an x-axis may be defined as a longitudinal direction of a battery rack, a y-axis may be defined as a width direction of the battery rack, and a z-axis may be defined as a height direction of the battery rack. In other words, the plane formed by the x-axis and the y-axis may be substantially parallel to the ground on which the battery rack is placed, and the z-axis may be in a direction substantially perpendicular to the ground.

Hereinbelow, 'lower' may be defined as a space in a direction facing the ground where the battery rack is installed, and 'upper' may be defined as a space in a direction opposite to the direction facing the ground. In other words, the 'lower' may be defined as a space in a -z-axis direction for a specific component, and the 'upper' may be defined as a space in a +z-axis direction for a specific component.

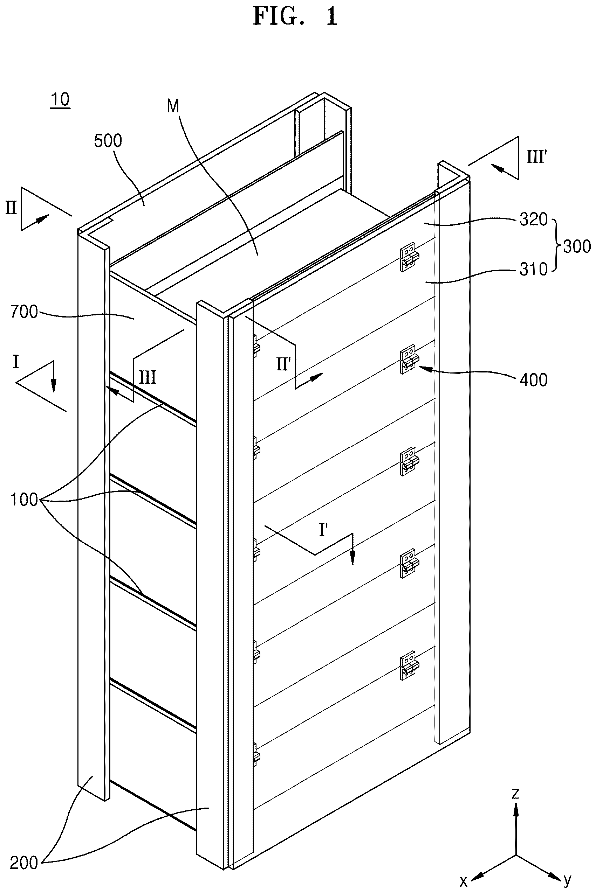

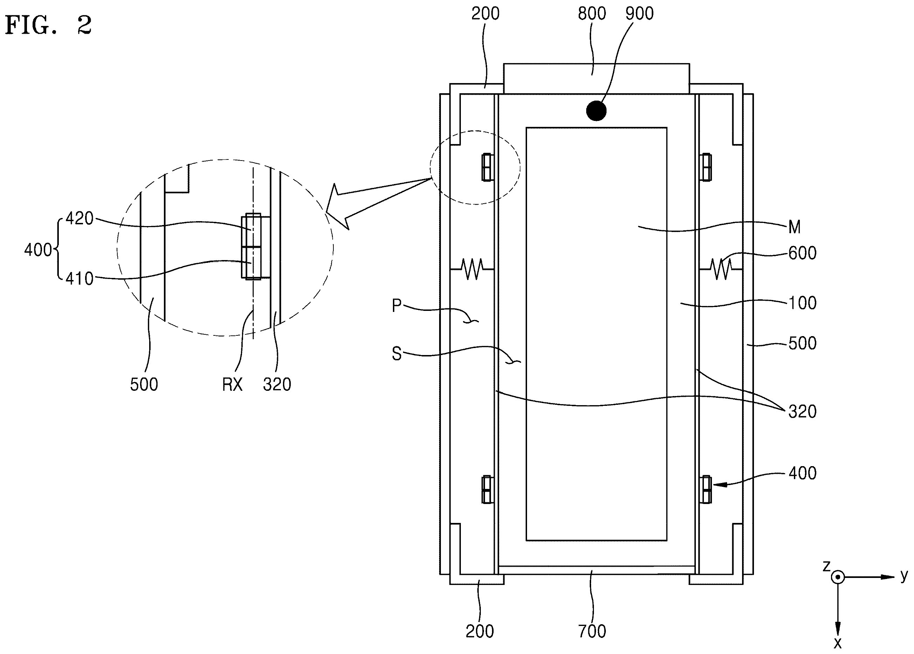

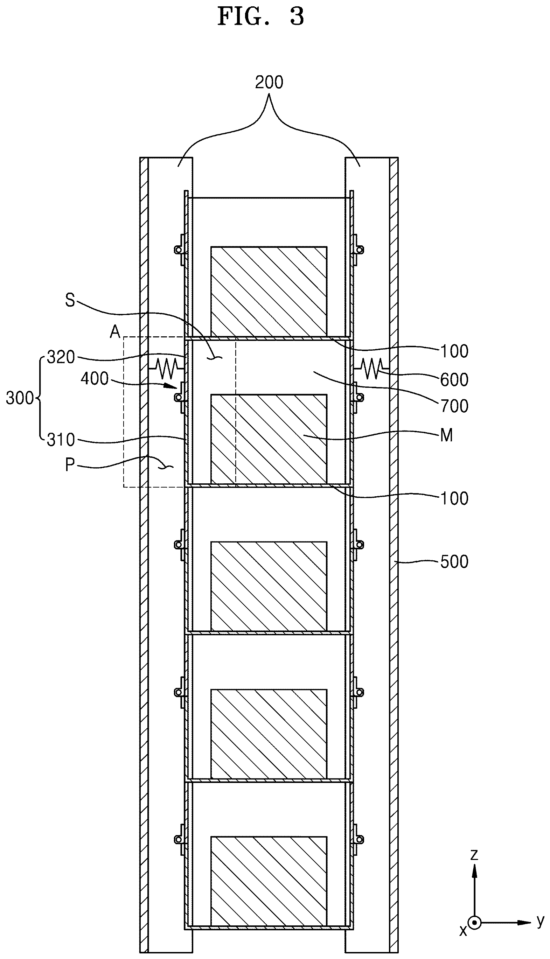

FIG. 1 shows a battery pack according to an embodiment of the disclosure. FIG. 2 is a cross-sectional view taken along a line I-I' of FIG. 1. FIG. 3 is a cross-sectional view taken along a line II-II' of FIG. 1.

Referring to FIGS. 1 to 3, a battery rack 10 according to an embodiment of the present disclosure may include a plurality of battery modules M. The battery rack 10 may provide a space in which the plurality of battery modules M may be stacked.

Referring to FIG. 1, the battery rack 10 may form part of an energy storage system (ESS) configured to provide energy to an electronic device including the plurality of battery modules M.

The battery rack 10 may be electrically connected to the electronic device. The battery rack 10 may supply electrical energy to an electronic device requiring power. Thus, the battery rack 10 may be used as a power source for an electronic device as part of the ESS.

In an embodiment, the battery rack 10 may include at least one battery module M, at least one base plate 100, at least one frame 200, at least one side body 300, at least one connection portion 400, at least one side cover 500, at least one elastic member 600, at least one end body 700, at least one guide body 800, and at least one leakage detection sensor 900.

Referring to FIGS. 1 to 3, each of the battery modules M may include a plurality of battery cells configured to store electrical energy therein.

The plurality of battery cells included in the battery module M may be connected in series or in parallel with each other to control the voltage or capacity of electrical energy supplied to the electronic device.

Although FIGS. 1 to 3 depict five battery modules M included in the battery rack 10, the number of battery modules M included in the battery rack 10 is not limited thereto. The number of battery modules M included in the battery rack 10 may be selected in various ways depending on the requirements of the electronic device that receives power from the battery rack 10.

The plurality of battery modules M may be stacked in a direction. Although FIGS. 1 to 3 show that the plurality of battery modules M are stacked in a direction substantially perpendicular to the ground, the stacking direction of the plurality of battery modules M is not limited thereto. In one or more embodiments, the battery modules M may be stacked in any other suitable direction. However, for convenience of a description, the following description will focus on an example in which the plurality of battery modules M are stacked in a direction substantially perpendicular to the ground, that is, in a height direction of the battery rack 10.

The plurality of battery modules M may be spaced apart from each other at a preset interval (or preset intervals) in the battery rack 10. For example, in one or more embodiments, the plurality of battery modules M may be spaced apart from each other at preset intervals in the height direction of the battery rack 10. Providing an interval between the battery modules M is configured to prevent (or at least mitigate) an abnormal phenomenon occurring in a specific battery module M from being transmitted to another battery module M.

Referring to FIGS. 1 to 3, the base plate 100 may provide a space in which the battery module M may be arranged. The base plate 100 may be arranged in a direction substantially parallel to the ground such that the battery module M may be arranged on the base plate 100. That is, the base plate 100 may support the battery module M arranged thereon.

A plurality of base plates 100 may be spaced apart from each other at a preset interval (or preset intervals) in a direction. For example, in one or more embodiments, a spacing interval between the plurality of base plates 100 may be greater than a height of the battery module M. The plurality of base plates 100 may independently maintain the state of each battery module M by setting the interval between the battery modules M.

Referring to FIGS. 1 and 3, each of the frames 200 may extend in a direction. For example, the frame(s) 200 may extend in a direction substantially perpendicular to the ground. Thus, the frame(s) 200 may be connected to the plurality of base plates 100 that are spaced apart from each other in the same direction.

The frame(s) 200 may be connected to the plurality of base plates 100 by means of bolts, nuts, etc. In this manner, the relative position of the base plates 100 with respect to the frame(s) 200 may be fixed. The frame(s) 200 may support the base plates 100 to maintain the interval between the plurality of base plates 100.

Referring to FIGS. 1 and 2, the frame 200 may be provided as a plurality of frames. For each of the battery modules M, a load of the battery module M transmitted from the base plate 100 may be distributed and applied to the plurality of frames 200. Thus, a load applied to each frame 200 may be reduced, thereby improving the structural stability of the battery rack 10.

In FIGS. 1 to 3, four frames 200 may be provided and may be respectively connected to corners of each of the base plates 100, but the number and arrangement of frames 200 are not limited thereto. However, for convenience of a description, the following description will focus on an example in which four frames are connected to the corners of each base plate 100 to support the base plates 100.

Referring to FIGS. 1 and 3, each of the side bodies 300 may be arranged on one of the base plates 100. For instance, each of the side bodies 300 may be arranged on a top surface of one of the base plates 100 and may have a shape extending in the height direction of the battery rack 10.

Each of the side bodies 300 may be spaced apart (e.g., by a gap) from a surface of the battery module M on one of the base plates 100 by a preset interval. In some embodiments, each of the side bodies 300 may be arranged to cover a surface of one of the battery modules M. Thus, the side body 300 may limit the flow of the air near the battery module M in a direction in which the side body 300 is arranged.

In an embodiment, each of the side bodies 300 may connect a pair of base plates 100 positioned adjacent to each other in the height direction. For example, the side body 300 may have a shape extending in the height direction of the battery rack 10 from the base plate 100, and it may be connected to the base plate 100 positioned thereon. Each of the side bodies 300 may separate the air near the battery module M from the outside air.

For example, a pair of side bodies 300 may be spaced apart from each other by a preset interval in the width direction of the battery rack 10 on the base plate 100. The pair of side bodies 300 may limit (reduce) the spread of the air near the battery module M in the width direction of the battery rack 10.

Referring to FIGS. 1 and 3, the side body 300 may be in contact with another base plate 100 positioned on the connected base plate 100. The side body 300 may substantially separate air flowing near a surface (e.g., an inner surface) facing the battery module M from air flowing near the other surface (e.g., an outer surface) opposite to the surface facing the battery module M.

Referring to FIGS. 1 to 3, the side body 300 may be provided as a pair or pairs of side bodies. In an embodiment, the pair of side bodies 300 may be spaced apart from each battery module M in the width direction of the battery rack 10 by a preset interval (e.g., a gap). In one or more embodiments, the battery module M may be supported by the pair of side bodies 300 and may be stably arranged on the base plate 100.

Referring to FIGS. 2 and 3, the pair of side bodies 300 may form an internal space S in which the battery module M is arranged. In some embodiments, the pair of side bodies 300 may form the internal space S together with the base plate 100.

Hereinafter, 'outside' may be defined as a space other than the internal space S on the base plate 100. In other words, the 'outside' may be defined as a space separated from the internal space S by the base plate 100, the side body 300, and the end body 700.

The pair of side bodies 300 may impede (e.g., limit) air flow between the internal space S and the outside. That is, the pair of side bodies 300 may maintain the internal space S and the outside air independently (or substantially independently) of each other.

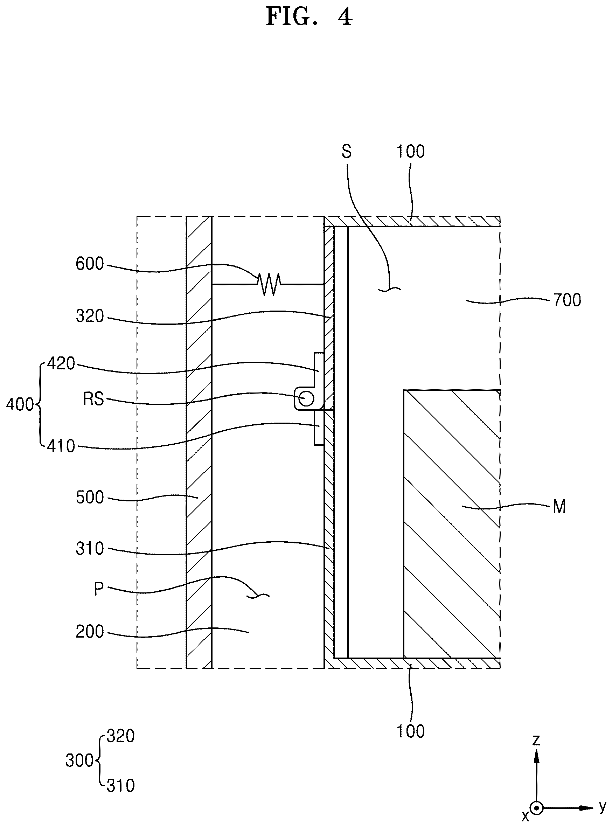

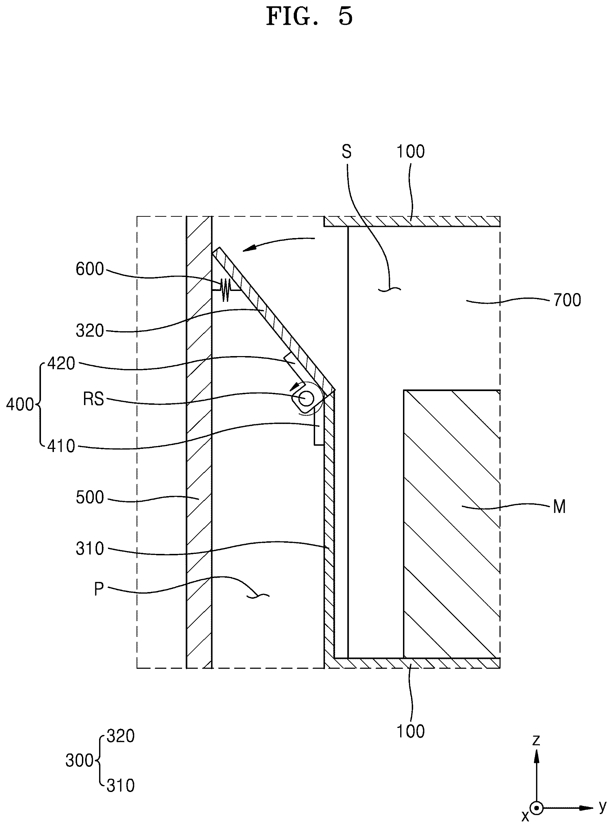

FIG. 4 is an enlarged view of a portion A of FIG. 3. FIG. 5 shows some of the components of FIG. 4 in operation.

Referring to FIGS. 1, 3, and 5, each of the side bodies 300 may include a first body 310 and a second body 320.

The first body 310 may be connected to one of the base plates 100. The first body 310 may be positioned on the base plate 100 and may have a shape extending in a direction substantially perpendicular to the ground. Thus, the first body 310 may support the battery module M such that the battery module M may be stably arranged in the internal space S.

The second body 320 may be arranged on the first body 310. The second body 320 may be supported by the first body 310 and may be arranged between the first body 310 and another base plate 100 arranged on the base plate 100 to which the first body 310 is connected.

Referring to FIGS. 2, 4, and 5, the second body 320 may be rotatably connected to the first body 310. The second body 320 may be configured to rotate with respect to the first body 310 and operate between a closed state for separating (e.g., isolating) the internal space S from the outside and an open state for communicating the internal space S with the outside. That is, the second body 320 may be configured to open and close the internal space S with respect to the outside by rotating with respect to the first body 310.

Referring to FIG. 4, when the second body 320 is in the closed state, the second body 320 may be arranged between the first body 310 and the base plate 100 arranged on top (above) the side body 300.

In some embodiments, the second body 320 may be arranged such that an opening is substantially not formed between the first body 310 and the base plate 100 arranged on top (above) the side body 300. Thus, when the second body 320 is in the closed state, the internal space S and the outside may be fluidically separated (e.g., isolated) from each other.

Referring to FIG. 5, when the second body 320 is in the open state, the second body 320 may be arranged such that an opening is formed between the first body 310 and the base plate 100 arranged on top (above) the side body 300. For example, a side of the second body 320 may be spaced apart from the base plate 100 arranged on top (above) to form an opening through which the internal space S and the outside may communicate with each other. Thus, when the second body 320 is in the open state, the internal space S and the outside may be fluidly connected to (in fluid communication with) each other.

The second body 320 may be configured to rotate around a virtual body rotation axis RX with respect to the first body 310. A rotating direction in which the second body 320 rotates with respect to the first body 310 may be determined according to a position at which the virtual body rotation axis RX is arranged.

Referring to FIGS. 2, 4, and 5, the virtual body rotation axis RX may be spaced apart from the side body 300 by a preset interval. Because the second body 320 is supported in the height direction of the battery rack 10 by the first body 310 in the closed state, rotational movement toward the first body 310 may be limited. Thus, the second body 320 may be rotatable in a direction in the closed state.

In an embodiment, the virtual body rotation axis RX may be spaced apart from the side body 300 in a direction away from the battery module M. The virtual body rotation axis RX may be arranged outwardly away from the side body 300.

That is, the second body 320 may be configured to rotate outwardly around the virtual body rotation axis RX when the first body 310 is the closed state. Because the second body 320 is supported by the first body 310 in the closed state, one-way rotation toward the outside may be possible.

Thus, the second body 320 may rotate upon application of a force toward the outside from the internal space S without rotating in spite of application of a force toward the internal space S from the outside.

Referring to FIGS. 2, 4, and 5, the virtual body rotation axis RX may be arranged parallel (or substantially parallel) to the base plate 100. In other words, the interval by which the virtual body rotation axis RX is spaced apart from the base plate 100 may be constant (or substantially constant).

As the virtual body rotation axis RX is arranged parallel (or substantially parallel) to the base plate 100, a distance by which the second body 320 rotating around the virtual body rotation axis RX is spaced apart from the base plate 100 may be maintained constant (or substantially constant) in a longitudinal direction of the second body 320. Thus, the structural stability of the battery rack 10 may be improved.

At least one of the pair of side bodies 300 may include the first body 310 and the second body 320. That is, any one of the pair of side bodies 300 may include the first body 310 and the second body 320, and the other side body 300 may be formed as an integrally formed body. However, for convenience of a description, the following description will focus on an example in which the pair of side bodies 300 both include the first body 310 and the second body 320.

Referring to FIGS. 1, 3, and 5, the connection portion 400 may be connected to the first body 310 and the second body 320. The connection portion 400 may have an end connected to the first body 310 and another end connected to the second body 320 so as to support the second body 320 with respect to the first body 310. Thus, the connection portion 400 may fix the relative position of the second body 320 with respect to the first body 310.

Referring to FIGS. 2, 4, and 5, the connection portion 400 may include a first connection member 410 and a second connection member 420.

The first connection member 410 may be connected to the first body 310, and the second connection member 420 may be connected to the second body 320. The first connection member 410 and the second connection member 420 may be connected to each other while being respectively connected to the first body 310 and the second body 320 to fix the relative position of the second body 320 with respect to the first body 310.

The first connection member 410 and the second connection member 420 may be rotatably connected to each other. For example, the first connection member 410 and the second connection member 420 may be connected by a rotating shaft RS, and the first connection member 410 and the second connection member 420 may rotate around the rotating shaft RS as a rotation axis.

Referring to FIGS. 2, 4, and 5, the rotating shaft RS may provide a rotation axis around which the second body 320 rotates with respect to the first body 310. In other words, the rotating shaft RS may determine a rotational direction in which the second body 320 rotates with respect to the first body 310.

A virtual axis extending from the rotating shaft RS may be coincident with the virtual body rotation axis RX. Thus, the rotating shaft RS may determine the position and direction of the virtual body rotation axis RX, which is a central axis around which the second body 320 rotates with respect to the first body 310.

Referring to FIGS. 1 to 5, the side cover 500 may be arranged spaced apart from the side body 300 (e.g., by a gap). The side cover 500 may be arranged apart from the side body 300, but may have a shape extending in a direction perpendicular (or substantially perpendicular) to the ground to cover a surface of a plurality of side bodies 300.

The side cover 500 may be arranged spaced apart from the side body 300 in the direction in which the virtual body rotation axis RX is spaced apart from the side body 300. The side cover 500 may contact and support the second body 320 that rotates in a direction around the virtual body rotation axis RX in the closed state.

The side cover 500 may limit a rotational range of the second body 320 that rotates toward the outside. For example, the side cover 500 may support the second body 320 in the open state such that the second body 320 stops rotating while having an inclination toward the height direction of the battery rack 10. In this manner, the movement of the second body 320 from the open state to the closed state may be readily achieved.

Referring to FIGS. 1 to 3, the side cover 500 may be connected to the frame 200. For example, opposite ends of the side cover 500 may be respectively connected to the frames 200 arranged on edges of the base plate 100. Thus, the relative position of the side cover 500 with respect to the side body 300 may be fixed.

Referring to FIGS. 2 to 5, the side cover 500 may form an exhaust passage P together with the frame 200 and the side body 300. The exhaust passage P may have a shape extending in a direction substantially perpendicular to the ground.

Referring to FIG. 1, the exhaust passage P may have a shape with an open top portion. When the second body 320 is in the open state, air in the internal space S may flow upward through the exhaust passage P and may be discharged to the outside. Thus, the exhaust passage P may provide a path through which air in the internal space S may communicate with the outside.

The air flowing into the exhaust passage P may be restricted (or at least mitigated) from flowing in the width or length direction of the battery rack 10 by the frame 200 and the side cover 500. That is, when the second body 320 is in the open state, the exhaust passage P may direct the air in the internal space S to the outside.

Referring to FIGS. 1 to 5, the elastic member 600 may be arranged between the second body 320 and the side cover 500. The elastic member 600 may be connected to the second body 320 and the side cover 500 to provide an elastic force to the second body 320. The elastic member 600 may provide an elastic force biasing the second body 320 into (or to return to) the closed position.

For example, when the second body 320 rotates toward the outside, the elastic member 600 may be compressed to provide an elastic force toward the internal space S to the second body 320. The second body 320 may receive an elastic force from the elastic member 600 in the open state and operate toward the closed state.

That is, the second body 320 may be closed by an elastic force after the air in the internal space S is discharged to the exhaust passage P. Thus, an air flow inside the exhaust passage P may be achieved.

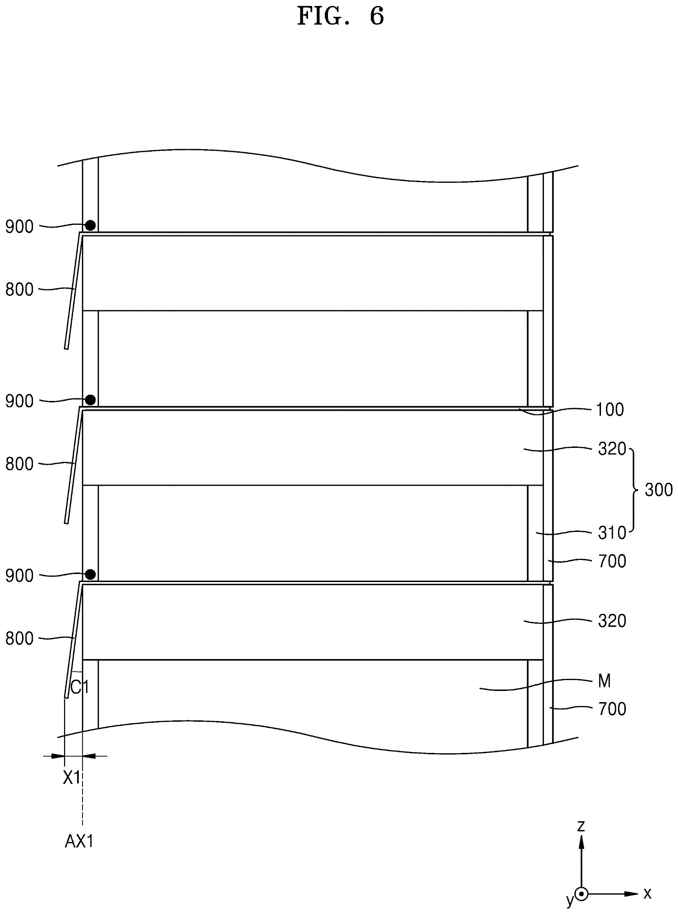

FIG. 6 is a cross-sectional view taken along line III-III' of FIG. 1.

Referring to FIGS. 2 and 6, the end body 700 may be arranged on the base plate 100. The end body 700 may be arranged on a side of the base plate 100 to separate the air near the battery module M from the outside air.

The end body 700 can be arranged at a preset interval in the longitudinal direction of the battery rack 10 from the battery module M. The end body 700 may limit the spread of the air near the battery module M in the longitudinal direction of the battery rack 10.

The end body 700 may form the internal space S together with the base plate 100 and the pair of side bodies 300. That is, the end body 700 may be connected to the pair of side bodies 300 to form the internal space S in which the battery module M may be arranged. The end body 700 may separate the air in the internal space S from the outside air by restricting the direction of the flow of the air near the battery module M.

In one or more embodiments, the end body 700 may be provided as a pair. The pair of end bodies 700 may be spaced apart at preset intervals in the length direction of the battery rack 10 on the base plate 100.

That is, the battery module M may be arranged between the pair of end bodies 700. Thus, the pair of end bodies 700 may separate the air near the battery module M from the outside air.

Referring to FIGS. 2 and 6, each of the guide bodies 800 may be connected to an edge of one of the base plates 100. The guide body 800 may receive liquid leaking from the battery module M through the base plate 100. That is, the guide body 800 may guide a flow direction of liquid leaking from the battery module M.

Referring to FIG. 6, each of the guide bodies 800 may be arranged to be inclined downward toward the ground. That is, the guide body 800 may guide the flow direction of the liquid such that the liquid leaking from the battery module M flows toward the ground. In this manner, the guide body 800 may separate the battery module M from the leaking liquid.

The guide body 800 may be arranged with a preset inclination with respect to the height direction of the battery rack 10. For example, the guide body 800 may be arranged to form a preset first angle C1 with respect to a virtual first axis AX1 that is substantially perpendicular to the ground. In other words, the guide body 800 may be arranged to be inclined with respect to the first axis AX1 and angled in a direction away from the base plate 100.

In an embodiment, the first angle C1 may be less than 90 degrees. Because the first angle C1 is less than 90 degrees, the liquid flowing over the guide body 800 may move toward (be directed toward) the ground. That is, the guide body 800 may guide a falling direction of the liquid leaking from the battery module M.

Referring to FIG. 6, an end of the guide body 800 may be spaced apart from the base plate 100 by a preset interval. In some embodiments, an end of the guide body 800 spaced apart from the base plate 100 may be spaced apart from the base plate 100 by a spacing distance X1 in the longitudinal direction of the battery rack 10.

That is, the guide body 800 may guide the flow direction such that the liquid leaking from the battery module M falls at the distance X1 from the base plate 100 arranged on a lower side. Thus, it is possible to prevent another battery module M arranged on the lower side (below) from coming into contact with the liquid leaking from the battery module M arranged on an upper side (above it).

Referring to FIGS. 2 and 6, the leakage detection sensor 900 may be arranged on each of the base plates 100. The leakage detection sensor 900 may be arranged on the base plate 100 to detect liquid leaking from the battery module M. The leakage detection sensor 900 may be configured to notify an operator of battery abnormality in the event that liquid leaking from the battery module M is detected.

The leakage detection sensor 900 may be arranged between the battery module M and the guide body 800. In other words, the leakage detection sensor 900 may be arranged on a path through which the liquid leaking from the battery module M is discharged to the outside. In this manner, the liquid leaking from the battery module M may be detected by the leakage detection sensor 900.

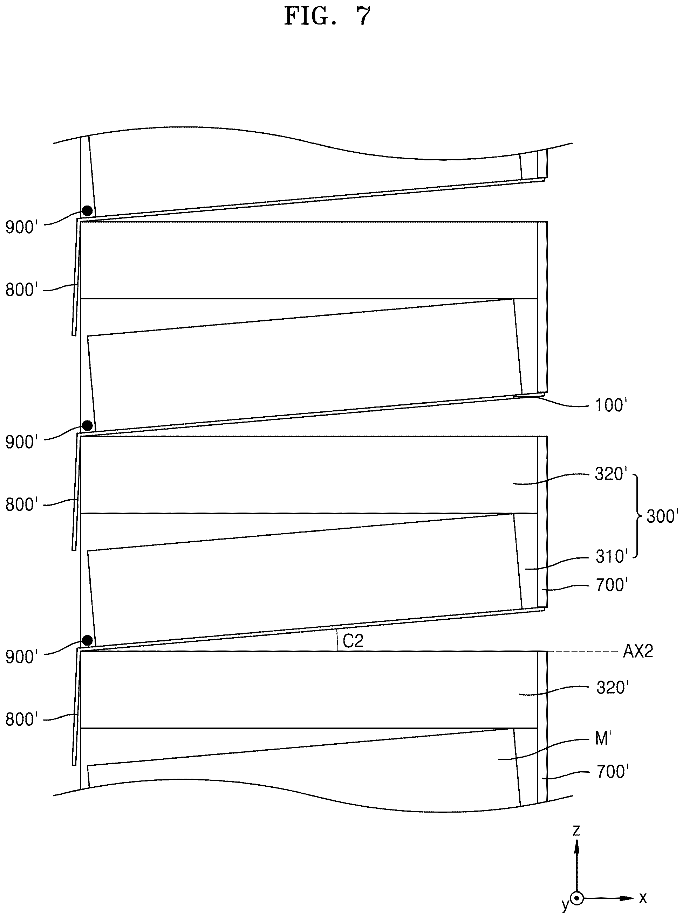

FIG. 7 is a cross-sectional view of a battery rack according to another embodiment of the disclosure.

The common features between the embodiment of the battery rack depicted in FIG. 7 and the battery rack 10 depicted in FIGS. 1-6 will not be described and the differences therebetween will be mainly described below.

Referring to FIG. 7, a base plate 100' may be arranged to have an inclination. The base plate 100' may be arranged to have an inclination with respect to the ground. For example, the base plate 100' may be arranged to form a preset second angle C2 with a second axis AX2 that is substantially parallel to the ground. Thus, liquid leaking from a battery module M' may flow in a direction in which the base plate 100' is inclined.

For example, in one or more embodiments, the base plate 100' may have an inclination toward in a direction in which a guide body 800' is connected. The liquid leaking from the battery module M' may flow along the inclination of the base plate 100' and the flow direction thereof may be guided by the guide body 800'. Thus, the liquid leaking from the battery module M' may fall to the ground without contacting another battery module M' arranged on a lower side thereof (i.e., below it).

The operating principle and effect of the battery rack 10 according to an embodiment of the disclosure will now be described.

Referring to FIGS. 1 to 5, in the event of abnormality in one of the battery modules M included in the battery rack 10, a high-temperature gas and flying debris may be discharged from the battery module M. A pressure in the internal space S may increase due to the high-temperature gas and flying debris discharged from the battery module M.

Referring to FIGS. 3 to 5, in the event that the pressure in the internal space S increases due to abnormality occurring in the battery module M, a force may be applied to the side body 300 in a direction away from the battery module M. For example, in the event that the pressure in the internal space S increases, a force may be applied to the second body 320 in a direction away from the battery module M.

The second body 320 may rotate around the rotation axis RX due to the pressure of the internal space S. The second body 320 may rotate in a direction away from the battery module M due to the pressure of the internal space S and thereby move into the open state/configuration.

In this manner, the second body 320 may connect the internal space S to the exhaust passage P in event that the pressure of the internal space S increases above a threshold pressure. Thus, the air in the internal space S may be discharged through the exhaust passage P.

The second body 320 may be supported by the side cover 500 in the open state. In some embodiments, the side cover 500 may be spaced apart from the side body 300 by a preset interval (e.g., a gap) to limit a rotational range (the extent of rotation) of the second body 320. Accordingly, the second body 320 may readily return to the closed state once the high-temperature gas has been discharged from the internal space S.

In an embodiment, in the event that a high-temperature gas is discharged from the battery module M arranged on the lower side of another battery module M, a force toward the internal space S may be applied to the second body 320. The pressure inside the exhaust passage P may increase, applying a force to the second body 320 such that the second body 320 may rotate toward the battery module M. Thus, the second body 320 may enter the closed state.

In another embodiment, the second body 320 may be connected to the side cover 500 by the elastic member 600 to receive an elastic force toward the internal space S from the elastic member 600. The second body 320 may be provided with an elastic force in the open state and may move into the closed state in response to the pressure in the internal space S decreasing below a threshold pressure.

In other words, the second body 320 may return to the closed state in response to the pressure in the internal space S decreasing. The second body 320 may return to the closed state to prevent (or at least mitigate) a gas discharged from another battery module M from coming into contact with the battery module M through the exhaust passage P.

Referring to FIG. 2, the air discharged from the battery module M may flow along the exhaust passage P. The flow direction of the air flowing along the exhaust passage P may be guided by the plurality of side bodies 300 and the side cover 500. Thus, the air discharged from the battery module M may flow along the exhaust passage P, thus being prevented (or at least mitigated) from coming into contact with another battery module M.

Referring to FIGS. 1 to 3 and 5, the liquid leaking from the battery module M may be transferred to the guide body 800 through the base plate 100. For example, in the event that a coolant leaks from a cooling device included in the battery module M, the coolant may be delivered to the guide body 800 from the base plate 100. For convenience of a description, the following description will focus on an example in which the liquid leaking from the battery module M is the coolant leaking from the cooling device.

Referring to FIGS. 2 and 5, the leaking coolant may flow toward the ground along the guide body 800. That is, the guide body 800 may guide the flow direction of the coolant.

The guide body 800 may be arranged to have an inclination with respect to the height direction of the battery rack 10, thereby preventing (or at least mitigating) the coolant from coming into contact with another battery module M. Thus, the guide body 800 may prevent (or at least mitigate) the battery module M from being exposed to the coolant and causing problems such as leakage.

Referring to FIG. 6, the base plate 100 may have an inclination toward a direction in which the guide body 800 is connected. That is, the coolant leaking from the battery module M may flow toward the guide body 800 along the slope of the base plate 100. Thus, the leaking coolant may be quickly discharged to the outside.

Referring to FIGS. 2, 6, and 7, the leakage detection sensor 900 may be configured to detect a coolant leaking from the battery module M and transmit information to an operator. For example, the leakage detection sensor 900 may be arranged between the battery module M and the guide body 800 to detect the coolant flowing to the guide body 800 from the base plate 100. Thus, in the event of abnormality in the battery module M, the operator may respond quickly.

A battery rack according to an embodiment of the disclosure may discharge a gas discharged from a specific battery module to the outside and prevent (or at least mitigate) another battery module from being exposed to the gas discharged from the specific battery module by utilizing an opening/closing structure of a side body that is spaced apart from the battery module.

Moreover, it is possible to guide the flow direction of liquid leaking from the battery module and prevent (or at least mitigate) another battery module from being exposed to the leaking liquid, by using a guide body connected to a side of the base plate.

Furthermore, by using a leakage detection sensor configured to detect liquid leaking from a battery module, a worker may be quickly informed of an abnormality of the battery module.

A battery rack and an energy storage system including the same according to an embodiment of the disclosure may discharge a gas discharged from a battery module to the outside and prevent (or at least mitigate) another battery module from being exposed to a gas discharged from a specific battery module, by using an opening/closing structure of a side body spaced apart from the battery module.

Moreover, it is possible to guide the flow direction of liquid leaking from the battery module and prevent (or at least mitigate) another battery module from being exposed to the leaking liquid, by using a guide body connected to a side of the base plate.

Furthermore, by using a leakage detection sensor configured to detect liquid leaking from a battery module, a worker may be quickly informed of an abnormality of the battery module.

However, effects that may be obtained through the disclosure are not limited to the above-described effects, and other technical effects not mentioned may be clearly understood by those of ordinary skill in the art from the description of the disclosure described below.

While the disclosure is described by limited embodiments and drawings, the disclosure is not limited thereby and various modifications and changes may be made by those of ordinary skill in the art within the claims set forth below.

## Claims

1. A battery rack (10) comprising:
a plurality of base plates (100, 100') spaced apart from each other in a direction, each base plate (100, 100') of the plurality of base plates (100, 100') having a battery module (M) arranged thereon;
a frame (200) extending in the direction and supporting the plurality of base plates (100, 100'); and
a pair of side bodies (300) on a base plate (100, 100') of the plurality of base plates (100, 100'), the pair of side bodies (300) facing each other with the battery module (M) therebetween,
wherein at least one of the pair of side bodies (300) comprises:
a first body (310) connected to the base plate (100, 100'); and
a second body (320) arranged on the first body (310) and connected to the first body (310) such that the second body (320) is rotatable relative to the first body (310) about a virtual body rotation axis (RX).

2. The battery rack (10) of claim 1, further comprising a connection portion (400) comprising:
a first connection member (410) connected to the first body (310); and
a second connection member (420) connected to the second body (320),
wherein the second connection member (420) is connected to the first connection member (410) and is rotatable relative to the first connection member (410) about the virtual body rotation axis (RX).

3. The battery rack (10) of claim 1 or 2, wherein the virtual body rotation axis (RX) is spaced apart from the at least one of the pair of side bodies (300) by a preset interval.

4. The battery rack (10) of claim 3, wherein the virtual body rotation axis (RX) is spaced apart from the at least one of the pair of side bodies (300) in a direction away from the battery module (M).

5. The battery rack (10) of any one of claims 1 to **4,** wherein the virtual body rotation axis (RX) is substantially parallel to the base plate (100, 100').

6. The battery rack (10) of any one of the preceding claims, further comprising a side cover (500) spaced apart from the at least one of the pair of side bodies (300) in the direction in which the virtual body rotation axis (RX) is spaced apart from the at least one of the pair of side bodies (300).

7. The battery rack (10) of claim 6, further comprising an elastic member (600) between the second body (320) and the side cover (500).

8. The battery rack (10) of any one of the preceding claims, wherein the at least one of the pair of side bodies (300) connects a pair of base plates (100, 100') of the plurality of base plates (100, 100') adjacent to each other.

9. The battery rack (10) of any one of the preceding claims, further comprising an end body (700) on one of the plurality of base plates (100, 100'), wherein the end body (700) and the pair of side bodies (300) form an internal space (S) in which the battery module (M) is accommodated.

10. The battery rack (10) of any one of the preceding claims, further comprising a guide body (800, 800') connected to an edge of one of the plurality of base plates (100, 100'), the guide body (800, 800') being inclined downwardly toward a ground.

11. The battery rack (10) of claim 10, wherein the guide body (800, 800') has a preset inclination in the direction.

12. The battery rack (10) of claim 10, wherein the one of the plurality of base plates (100, 100') is inclined toward the guide body (800, 800').

13. The battery rack (10) of any one of the preceding claims, further comprising a leakage detection sensor (900) on one of the plurality of base plates (100, 100'), the leakage detection sensor (900) being configured to detect liquid leaking from the battery module (M).

14. An energy storage system comprising a battery rack (10) according to any one of the preceding claims.

15. The energy storage system of claim 14, further comprising a connection portion (400) comprising:
a first connection member (410) connected to the first body (310); and
a second connection member (420) connected to the second body (320),
wherein the second connection member (420) is connected to the first connection member (410) and is rotatable relative to the first connection member (410) about the virtual body rotation axis (RX).
